# EUROPÄISCHE PATENTSCHRIFT

(11) **EP 0 922 529 B1**
(45) Veröffentlichungstag und Bekanntmachung des Hinweises auf die Patenterteilung: **06.11.2002**
(21) Anmeldenummer: 97121794.8
(22) Anmeldetag: 11.12.1997
(51) Int. Cl.: B23Q 16/02, B23Q 7/14, B23Q 3/18

(54) **Einheit zum lösbaren Verbinden von Teilen einer Palettiervorrichtung und Palettiervorrichtung**
Unit for releasable connection of parts of a palletising device and a palletising device itself
Unité pour connecter temporairement des parties d'un dispositif de palletisation et un dispositif de palettisation

(43) Veröffentlichungstag der Anmeldung: 16.06.1999
(73) Patentinhaber: Parotec AG, 9230 Flawil (CH)
(72) Erfinder: Forrer, Fritz, CH-9100 Herisau (CH)
(74) Vertreter: Stocker, Kurt

(56) Entgegenhaltungen:
- EP-A- 0 555 810
- WO-A-88/10172
- DE-A- 3 743 894
- DE-A- 4 341 046
- DE-C- 3 919 077
- DE-U- 9 203 992
- US-A- 5 190 272
- PATENT ABSTRACTS OF JAPAN vol. 10, no. 196 (M-497) [2252] , 10.Juli 1986 & JP 61 038837 A (KATSUHIRO YOSHIE), 24.Februar 1986,

## Beschreibung

Die Erfindung bezieht sich auf eine Einheit nach dem Oberbegriff des Anspruches 1 und eine Palettiervorrichtung mit mindestens einer Palettenaufnahme, mindestens einer Palette und mindestens zwei Einheiten je bestehend aus zwei miteinander verbindbaren Kopplungselementen. Eine Einheit gemäß dem Oberbegriff des Anspruchs 1 ist aus dem Dokument EP 0 555 810 A bekannt.

In der Werkstückbearbeitung werden sowohl Werkstücke als auch Werkzeuge über Palettiervorrichtungen mit den Einstellvorrichtungen und den Bearbeitungsmaschinen verbunden. Die Palettiervorrichtungen umfassen jeweils Palettenaufnahmen und damit verbindbare Paletten an denen das Werkstück oder das Werkzeug befestigt wird. Der Vorteil der Palettierung besteht darin, dass die palettierten Gegenstände mit kleinem Aufwand, insbesondere automatisiert, zum Einstellen, Bearbeiten und Vermessen an verschiedenen Maschinen in definierter Lage festsetzbar sind. Daher sind aus dem Stande der Technik verschiedene Palettiervorrichtungen bekannt. Grundsätzlich umfasst jede Palettiervorrichtung Einheiten bestehend aus zwei aneinander festsetzbaren Kopplungselementen, zwischen denen eine Verbindungsvorrichtung zum Erzielen einer axialen Klemmung in der Richtung einer Spannachse ausgebildet ist. Nebst der lösbaren Verbindung muss ein Palettiersystem zumindest in einer Richtung eine definierte Koordinatenzuordnung ermöglichen. Die Spannachse wird als z-Achse betrachtet und ihr Nullpunkt wird über z-Auflageflächen definiert. Zum Gewährleisten einer definierten Ausrichtung der senkrecht zur z-Achse verlaufenden x- bzw. y- Achse ist jeweils zumindest eine Lagezuordnungsvorrichtung ausgebildet.

Aus der DE 41 35 418 A1 ist eine Verbindungsvorrichtung bekannt, die das Festklemmen der Kopplungselemente über Bolzen und Aufnahmen dafür erzielt, indem Federn die Kugeln eines Kugelkäfigs an eine Nut des Bolzens pressen. Zum Lösen der Verbindung wird mit einem Hydraulikkolben die Klemmkraft der Federn überwunden.

Es gibt nun Systeme, die an den Paletten und an den Palettenaufnahmen jeweils mehrere, insbesondere vier, Kopplungselemente aufweisen, mit denen eine Klemmung an die z-Auflage gewährleistet wird, die aber in der x- und y-Richtung etwas Spiel lassen. Zum Gewährleisten einer definierten x- und y-Ausrichtung sind an der Palette und an der Palettenaufnahme für jede Ausrichtungsachse je zwei Ausrichtungselemente befestigt, wobei die Elemente der Palette, gegebenenfalls jene der Aufnahme, etwas federnd und die Elemente der Aufnahme, bzw. der Palette, starr sind. Die Ausrichtungselemente der x- bzw. y-Ausrichtung lassen im miteinander verbundenen Zustand jeweils unterschiedliche Ausdehnungs- und Schrumpfbewegungen entlang der jeweiligen Achse zu, wobei aber der Schnittpunkt der x- und der y-Achse als Nullpunkt ortsfest bleibt und eine Verdrehung um die z-Achse durch ein quer zur jeweiligen Ausrichtung passendes Anliegen von jeweils zwei miteinander verbundenen Ausrichtungselemente-Paaren in x- bzw. y-Richtung verhindert wird. Eine derartige Palettiervorrichtung geht von einer Standard-Palettengrösse aus, die durch die Anordnung der Ausrichtungselemente bestimmt wird. Jede Palette muss sich zumindest über den Bereich der Ausrichtungselemente erstrecken. Das heisst für kleinere Paletten müsste ein zweiter Set von Ausrichtungselementen vorgesehen werden. Bei Paletten die sich über die doppelte Länge einer Standardpalette erstrecken, könnten zwei x-y-Ausrichtungssysteme nebeneinander angeordnet werden, was aber aufgrund der Überbestimmung, bzw. aufgrund zweier festverbundener Nullpunkte, bei unterschiedlichen Dehnungen der Palettenaufnahme und der Palette zu Problemen führt. Die Herstellung der Paletten und Palettenaufnahmen ist sehr aufwendig, weil die Ausrichtungselemente je einzeln äusserst präzise angeordnet werden müssen. Zudem ist diese Palettiervorrichtung nicht an die jeweiligen Bedürfnisse anpassbar.

Es sind auch Lösungen bekannt bei denen die x-y-Ausrichtung durch die Kopplungselemente erfolgt. Dabei wird eine Einheit mit zwei verbindbaren Kopplungselementen mit genauer Passung vorgesehen, die einen gemeinsamen Nullpunkt festhält. Die Einheiten entlang einer durch diesen Nullpunkt führenden x- und einer y-Achse lassen in der Richtung der x- bzw. y-Achse etwas Spiel frei, quer zur x- bzw. y-Achse sind sie aber im wesentlichen spielfrei. Einheiten die weder auf der x- noch auf der y-Achse liegen müssen in allen Richtungen etwas Spiel freilassen. Wenn nun eine Palettenaufnahme und eine entsprechende Palette mit vier Einheiten bzw. mit je vier Kopplungselementen aufgebaut werden soll, so müssen drei verschiedene Typen von Einheiten eingesetzt werden, nämlich im Nullpunkt eine passende Nullpunktseinheit, entlang der Achsen Einheiten, die in Achsrichtung Spiel freilassen, und neben den Achsen Einheiten mit Spiel in allen Richtungen der x-y-Ebene. Der Aufbau von Palettiervorrichtungen verschiedener Grösse ist mit diesen Einheiten möglich, wobei aber das Verwenden von drei verschiedenen Typen von Einheiten umständlich ist und zu Fehlern führt.

Aus der EP 0 111 092 B2 ist eine Kopplungsvorrichtung, bzw. Einheit, bekannt, die eine den Konussitzen entsprechende Zentrizität und in der Normalebene zur zentrischen Achse eine definierte Winkellage zwischen den miteinander verbundenen Organen, bzw. Kopplungselementen, gewährleistet. Die Zentrizität, bzw. das Verunmöglichen einer Versetzung quer zur zentrischen Achse wird durch einen konischen Zapfen gewährleistet, der in eine passende genau kreisrunde Öffnung einer mit dem einen Organ fest verbundenen Scheibe eingepresst wird. Der Öffnungsrand wird vom Zapfen beim Spannen zentralsymmetrische etwas axial verformt. Eine Verformung quer zur Achse wird durch die Formstabilität der kreisrunden Öffnung, bzw. des vollständig um die Öffnung verlaufenden Scheibenbereiches verhindert. Zum präzisen Festhalten der Winkellage ist eine exzentrisch angeordnete ovale Öffnung mit radiusparallelen Berandungen in der Scheibe ausgebildet und am anderen Organ ein, in die ovale Öffnung pressbarer, weiterer konischer Zapfen vorgesehen. Um die Zentrierung nicht durch den zweiten Zapfen zu beeinträchtigen, ist in der Scheibe ein zwischen den beiden Öffnungen verlaufender Schlitz ausgebildet. Eine exakte Positionierung an verschiedenen Maschinen ist nur möglich, wenn die beiden Zapfen und die beiden Öffnungen exakt bearbeitet sind und die Scheibe genau montiert ist. Die beiden Organe werden mit einer zentral angeordneten Spannschraube miteinander verbunden. Diese Lösung hält den Nullpunkt nicht, wie oben beschrieben, durch zwei sich schneidende, fixierte Achsen fest, sondern durch eine Punktfixierung. Zudem ist eine durch die Punktfixierung verlaufende Achse fixiert. Der Einsatz mehrerer solcher Kopplungsvorrichtungen an einer Palettiervorrichtung ist aufgrund von Überbestimmungsproblemen nicht möglich, bzw. nicht zweckmässig.

Die EP 0 267 352 B1 beschreibt eine weitere Lösung, bei der die hochgenaue Kupplung zweier Teile auch dann erreicht wird, wenn eines der zwei ineinandergreifenden Teile mit grösseren Toleranzen, federnd ausgebildet ist. Das eine Teil umfasst auf einem Kreis um den Nullpunkt angeordnete lagerbockähnliche Elemente mit Nuten, die radial vom Nullpunkt wegführen. Die Nuten sind elastisch ausgebildet, so dass in die Nuten eingeführte präzise angeordnete Profilstücke des anderen Teiles die Nuten in Umfangsrichtung etwas deformieren können. Um auch bei herstellungsbedingten Ungenauigkeiten der beiden Teile eine genaue Positionierung in Bezug auf die x- und y-Achse sicherzustellen, müssen um den Nullpunkt in gleichen Winkelabständen mindestens drei Nuten und entsprechend drei Profilstücke vorgesehen werden. Die Elastizität der Nuten ist lediglich dazu vorgesehen, dass die Teile auch bei kleinen Ungenauigkeiten des einen Teiles noch verbindbar sind. Die Elastizität darf aber nicht so gross sein, dass der Nullpunkt nicht genügend genau fixiert ist. Weil der Nullpunkt und die Winkelausrichtung bereits mit einer Einheit aus zwei verbindbaren Teilen sehr genau fixiert wird, ist wiederum der Einsatz mehrerer solcher Kopplungsvorrichtungen an einer Palettiervorrichtung aufgrund von Überbestimmungsproblemen nicht zweckmässig. Zudem ist die Bearbeitung des präzisen Teiles mit einem in z-Richtung verlaufenden Vorsprung und von diesem in genau festgelegten Richtungen radial verlaufenden präzise bearbeiteten Profilstücken aufwendig. Auch die lagerbockähnlichen Elemente, die quer zur radial verlaufenden Nut elastische Federeigenschaften haben, sind mit einem grossen Herstellungs- und Befestigungsaufwand verbunden.

Der Erfindung liegt nun die Aufgabe zugrunde, eine Einheit zum lösbaren Verbinden von Teilen eines Palettiersystems zu finden, die einfach aufgebaut und vielseitig einsetzbar ist.

Diese Aufgabe wird durch die Merkmale des Anspruches 1 gelöst. Die abhängigen Ansprüche beschreiben bevorzugte Ausführungsformen.

Es wurde erkannt, dass die Lagezuordnungsvorrichtung eine Federeinrichtung umfassen soll, die Versetzungen der miteinander verbundenen Kopplungselemente quer zur Spannachse zulässt und zwischen den Kopplungselementen beim Spannen zentrierend wirkende Zentrierkräfte bereitstellbar macht. Mit einer solchen Federeinrichtung kann auf die Fixierung eines Nullpunktes durch eine exakt passend gekopellte Einheit oder durch eine Lagezuordnungsvorrichtung, die zwei Achsen senkrecht zur z-Achse fixiert, verzichtet werden. Um lediglich einen Nullpunkt zu fixieren genügt bereits eine Einheit. Die zentrierende Federeinrichtung gewährleistet eine Zentrierung während des Spannvorganges. Im eingespannten bzw. festgeklemmten Zustand bleibt der Nullpunkt auch bei quer zur z-Achse zwischen den beiden Kopplungselementen der Einheit wirkenden Kräften fixiert. Die Fixierung eines Nullpunktes und einer Winkelausrichtung quer zur z-Achse erfolgt durch den Einsatz von mindestens zwei Einheiten. Wenn nun in einer Palettiervorrichtung zwei oder mehr erfindungsgemässe Einheiten eingesetzt sind, so ergeben sich keine Überbestimmungsprobleme, weil die Zentrierung jeder Einheit federnd ist und diese Federung kleine Achsabweichungen zwischen den einander zugeordneten Kopplungselementen beim Spannen kompensieren kann. Die am Ende des Spannvorganges erzielte Fixierung definiert den Nullpunkt und die Winkelausrichtung.

Die erfindungsgemässe Einheit gewährleistet beim Einzeleinsatz, beispielsweise zur Werkzeugaufnahme bzw. Spannzangenhalterung, eine exakte Zentrierung der Spann- bzw. Werkzeugachse. Zudem ermöglichen erfindungsgemässe Einheiten den Aufbau von beliebigen Palettiervorrichtungen. Die Palettiervorrichtungen können von Anwendern aufgebaut werden, indem in Palettenaufnahmen und Paletten beispielsweise mit einer Lehre Sackbohrungen angebracht und in diese Bohrungen Kopplungselemente der erfindungsgemässen Einheiten eingesetzt werden. Dabei muss der Anwender nur einen Typ von Einheit einsetzen, was eine Verwechslungsgefahr ausschliesst. Zudem spielt die Drehausrichtung der Kopplungselemente um die Spannachse im wesentlichen keine Rolle. Wenn nun einem Anwender lediglich die Einheiten geliefert werden müssen, so kann auf ein zusätzliches Transportieren von Paletten und Palettenaufnahmen, bzw. des Materials dafür, verzichtet werden. Die Federeinrichtung ist mit jeder bekannten Verbindungs- bzw. Spannweise einsetzbar.

Die Federeinrichtung, die Versetzungen quer zur Spannachse zulässt und beim Spannen zentrierend wirkende Zentrierkräfte bereitstellt, kann einfach ausgebildet werden. Von einem ersten Kopplungselement stehen mindestens drei, vorzugsweise vier, gegebenenfalls aber sechs, Federteile in im wesentlichen regelmässigen Abständen entlang einer Kreislinie um die Spannachse, radial gegen eine kreisförmig um die Spannachse verlaufende Anschlagsfläche eines zweiten Kopplungselementes vor. Beim Spannen sind die Federelemente im Kontakt mit der Anschlagsfläche elastisch so verformbar, dass zwischen den Federteilen und der Anschlagsfläche radiale Zentrierkräfte auftreten. Die Federelemente können etwa von einem zentralen Bereich ausgehend im wesentlichen radial nach aussen führen, oder aber von einem Ringbereich ausgehend nach innen führen. Die Federelemente sind im Bereich der Anschlagsfläche voneinander getrennt und können somit unabhängig verformt werden, was für Versetzungen quer zur Spannachse nötig ist.

Es versteht sich von selbst, dass die Federelemente zum Erzielen der gewünschten Federeigenschaft im ungespannten Zustand auch tangential, bzw. in einer beliebigen Richtung in einer Normalebene zur Spannachse oder selbst schief zur Normalebene verlaufen können. Die Anschlagsfläche ist jeweils an die Federelemente angepasst ausgebildet. Gegebenenfalls sind an beiden verbindbaren Kopplungselementen zusammenwirkende Federelemente vorgesehen. Es ist auch möglich, die zentrierende Federung, in einem oder in beiden Kopplungselementen oder auch zwischen einem Kopplungselement und der Palette bzw. der Palettenaufnahme anzuordnen.

Die erfindungsgemässe Einheit ist einfach aufgebaut und entsprechend einfach herzustellen. Die federnde Zentrierung ist direkt an der Verbindungsvorrichtung ausgebildet und muss daher nicht mit einem zusätzlichen Arbeitsaufwand getrennt an der Palette bzw. Palettenaufnahme befestigt werden. Die erfindungsgemässen Einheiten, bzw. Palettisiervorrichtungen damit, können sowohl bei äusserst hohen als auch bei tiefen Präzisionsanforderungen eingesetzt werden. Bei hoher Präzision wird in klimatisierten Räumen mit Paletten und Palettenaufnahmen mit konstanter Temperatur gearbeitet, so dass keine Dehnungen oder Schrumpfungen zu kompensieren sind. Die Federeinrichtungen gewährleisten somit immer zentrierte Spannverbindungen zwischen den eingesetzten Kopplungselementen. Bei tiefer Präzision können Paletten und Palettenaufnahmen unterschiedlich gedehnt bzw. geschrumpft sein, so dass die Kopplungselemente nebeneinander angeordneter Einheiten nicht zentriert aufeinander treffen. Die Federeinrichtungen ermöglichen trotzdem ein Zusammenführen der Kopplungselemente, wobei die mittlere Zentrier-Abweichung bei allen Einheiten durch alle Zentrierkräfte im wesentlichen minimiert wird.

Die Zeichnungen erläutert die erfindungsgemässe Einheit, bzw. eine Palettiervorrichtung damit, anhand eines Ausführungsbeispieles. Dabei zeigt
- Fig. 1: einen Schnitt durch eine Einheit gemäss der Linie A-A in Fig. 2,
- Fig. 2: eine Draufsicht auf einen Ausschnitt einer Palettenaufnahme mit einem Kopplungselement mit vier Federteilen,
- Fig. 3: eine Ansicht von unten eines Kopplungselementes der Palette,
- Fig. 4: eine Draufsicht einer Federeinrichtung mit drei Federteilen, und
- Fig. 5: eine Draufsicht auf eine Palettenaufnahme mit vier Kopplungselementen

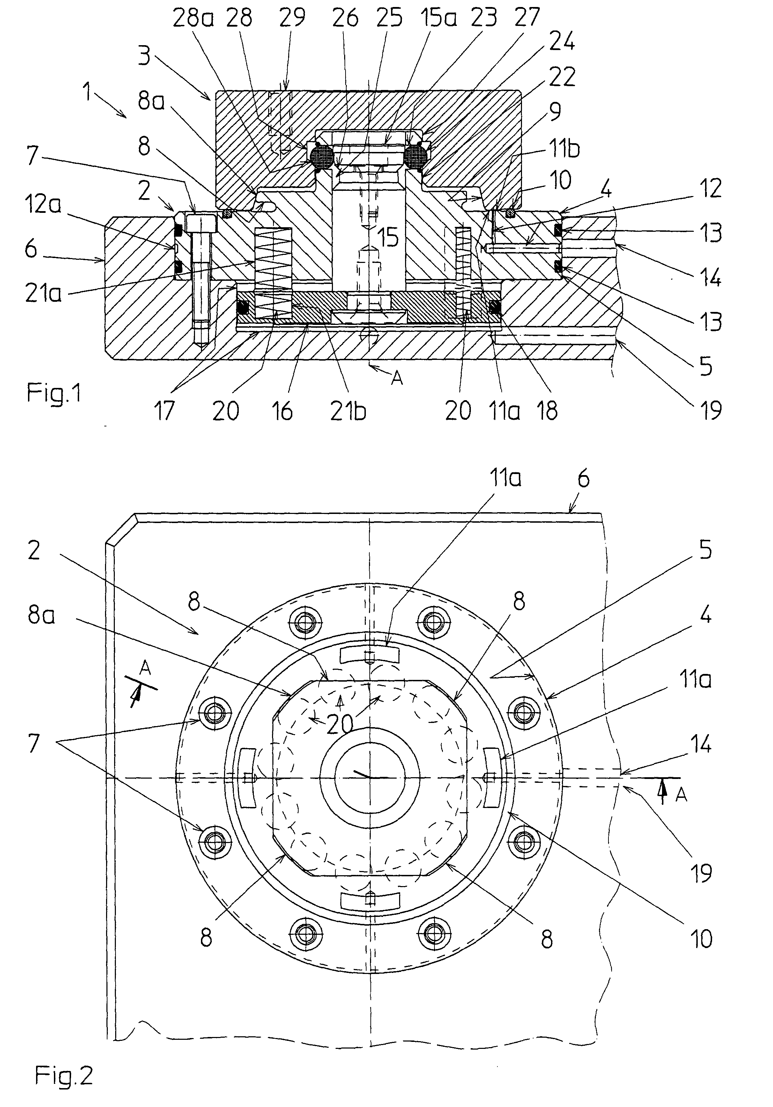

Fig. 1 und 2 zeigen eine Einheit 1, die aus einem ersten Kopplungselement 2 und einem zweiten Kopplungselement 3 zusammengestellt ist. Das erste Kopplungselement 2 umfasst einen ersten Scheibenteil 4 mit einer Achse A, der mit einem zylindrischen Bereich in eine erste Sackbohrung 5 einer Palettenaufnahme-Platte 6 eingesetzt und mit Befestigungsschrauben 7 befestigt ist. Im dargestellten Beispiel entspricht die Achse A im wesentlichen der Spannachse. In Achsrichtung von der Platte 6 abgewendet, ist am ersten Scheibenteil 4 eine Federeinrichtung mit vier, gegebenenfalls aber drei oder mehr als vier, insbesondere sechs, radial vorstehenden Federteilen 8 ausgebildet. Die Federteile 8 sind im wesentlichen in regelmässigen Abständen entlang einer Kreislinie um die Achse A angeordnet. Die radial aussen liegenden freien Endbereiche 8a der Federteile 8 sind in Achsrichtung aufgrund der Federeigenschaft der Federteile 8 federnd auslenkbar. Das mit dem ersten verbundene, zweite Kopplungselement 3 umfasst eine kreisförmig um die Spannachse verlaufende Anschlagsfläche 9, die etwa von der Innenfläche eines Ringbereiches gebildet wird. Die freien Endbereiche 8a liegen während des Spannens und im gespannten Zustand an der Anschlagsfläche 9 an. Die radial aussen liegenden Flächen der Endbereiche 8a und die Anschlagsfläche 9 sind vorzugsweise konisch, insbesondere im wesentlichen mit der gleichen Konizität ausgebildet. Während des Spannvorganges werden die beiden Kopplungselemente 2 und 3 in Achsrichtung aufeinanderzu bewegt. Dabei werden die Federteile 8 etwas um quer zur Spannachse verlaufende Biegelinien durchgebogen, bzw. die Endbereiche 8a werden etwas von der Anschlagsfläche 9 in Achsrichtung mitgenommen. Wenn nun die Achse des ersten Scheibenteiles 4 und die Achse des zweiten Kopplungselementes 3 nicht genau übereinstimmen, so werden nicht alle Federteile 8 gleich stark durchgebogen, die dabei entstehenden ungleichen Rückstellkräfte erzeugen im Zusammenwirken der beiden Kopplungselemente 2 und 3 radiale Zentrierkräfte.

Um verschmutzungsbedingte Zentrierfehler, bzw. eine Verschmutzung der Federteile und/oder der Anschlagsfläche, zu vermeiden, ist eine erste Dichtung 10 zwischen den in Achsrichtung aneinander anliegenden Stirnseiten des ersten und des zweiten Kopplungselementes 2 und 3 ringförmig radial ausserhalb der Anschlagsfläche angeordnet.

Die erste Dichtung 10 führt auch um z-Auflageflächen 11a und 11b in der Stirnseite des ersten und des zweiten Kopplungselementes 2 und 3, so dass auch diese bei festgespannten Kopplungselementen vor Schmutz bzw. Partikeln, die bei der Bearbeitung eines Werkstückes entstehen, geschützt sind. Die Ausrichtung der z-Achse wird durch die aneinander anliegenden z-Auflageflächen 11a und 11b des ersten und des zweiten Kopplungselementes festgehalten.

Die z-Auflageflächen 11a des dargestellten Beispieles können mit Druckluft gereinigt werden, wozu gegebenenfalls im ersten Scheibenteil 4 Druckluftzuführungen 12 ausgebildet sind. Die Druckluftzuführungen 12 münden vorzugsweise in den z-Auflageflächen 11a und können somit auch zur Kopplungskontrolle verwendet werden, weil die z-Auflageflächen 11b im gekoppelten Zustand die Austrittsöffnungen in den z-Auflageflächen 11a verschliessen. Eine Kopplungs- oder Anwesenheits-Kontrollvorrichtung umfasst vorzugsweise einen Druck- oder einen Durchflusssensor, so dass im gekoppelten Zustand ein hoher Druck und/oder ein kleiner Durchfluss sowie im freien Zustand ein tiefer Druck und/oder ein hoher Durchfluss erfassbar ist. Der erfasste Wert wird einer Vergleichsstufe zugeführt, die im Vergleich mit einem Schwellwert den Zustand erkennt. Die Druckluftzuführungen 12 im ersten Scheibenteil 4 umfassen vorzugsweise einen Ringkanal 12a in der zylindrischen Aussenfläche des Scheibenteiles 4, der in Achsrichtung beidseits mit einer zweiten Dichtung 13 abgedichtet ist und von einer Zuführleitung 14 in der Platte 6 mit Druckluft speisbar ist.

Die beiden Kopplungselemente 2 und 3 könnten beispielsweise mit einer Schraube verbunden werden. Bevorzugt ist aber eine automatisch betätigbare Spannvorrichtung, die gegebenenfalls mechanisch spannt und/oder entspannt. Vorzugsweise wird aber eine Spannvorrichtung mit Federelementen und einer den Federelementen entgegen wirkenden fluidbetätigten Entriegelung kombiniert. Die Entriegelung erfolgt pneumatisch oder hydraulisch mit einer Zylinder-Kolben-Anordnung.

Im dargestellten Ausführungsbeispiel ist durch eine zentrale Bohrung des ersten Scheibenteiles 4 ein Bolzen 15 durchgeführt, der mit einem zweiten Scheibenteil 16 verbunden ist, wobei der zweite Scheibenteil 16 in einer, koaxial an die erste anschliessenden, zweiten Sackbohrung 17 eingesetzt und darin kolbenartig bewegbar ist. Eine Dichtung 18 an der zylindrischen Aussenfläche des zweiten Scheibenteiles 16 schliesst den durch die Betätigungsleitung 19 fluidbeaufschlagbaren Zylinderraum, bzw. abgeschlossenen Teilraum der zweiten Sackbohrung 17, im wesentlichen dicht ab. Durch eine Druckbeaufschlagung des Zylinderraumes wird der zweite Scheibenteil 16 gegen den ersten Scheibenteil 4 gepresst. Dieser Presskraft ist aber die Federkraft der Pressfedern 20 entgegengerichtet. Die Pressfedern sind in gleichmässigen Abständen um die Achse A angeordnet und stellen eine für die Klemmung benötigte hohe Presskraft bereit. Um die ersten Kopplungselemente 2 in z-Richtung mit kleinen Bauhöhen bereitstellen zu können sind die Pressfedern 20 in Federbohrungen 21a und 21b des ersten und des zweiten Scheibenteiles 4 und 16 aufgenommen. In der Klemmlage ist zwischen dem ersten und dem zweiten Scheibenteil 4 und 16 ein Abstand vorgesehen.

Der erste Scheibenteil 4 umfasst in Achsrichtung am freien, dem zweiten Kopplungselement zugewendeten, Ende einen über die Federteile 8 hinausragenden Hülsenbereich 22 mit einer Kugelaufnahme 23, insbesondere einem Kugelkäfig, für Kugeln 24. Im ersten Scheibenteil 4 erstreckt sich der Bolzen 15 vom zweiten Scheibenteil 16 bis über die Kugelaufnahme 23 hinaus. Im Bereich der Kugelaufnahme 23 ist im Bolzen 15 eine Bolzennut 25 mit konischen Berandungsflächen und gegen das freie Bolzenende hin an die Bolzennut 25 anschliessend eine konische Bolzenpressläche 26 ausgebildet. Der Hülsenbereich 22 ist in eine Aufnahmebohrung 27 eines zweiten Kopplungselementes 3 einführbar und aus dieser entnehmbar, wenn der zweite Scheibenteil 16 unter Fluidbeaufschlagung mitsamt dem Bolzen 15 gegen den ersten Scheibenteil 4 gepresst ist. In dieser Freigabelage des Bolzens 15 ist die Bolzennut 25 radial innerhalb der Kugelaufnahme 23 angeordnet und die Kugeln 24 können soweit in die Bolzennut eintreten, dass sie nicht über die zylindrische Aussenberandung des Hülsenbereiches 22 vorstehen. Die Aufnahmebohrung 27 des zweiten Kopplungselementes 3 umfasst eine ringförmig um die Spannachse verlaufende Aufnahmenut 28 mit einer konischen Aufnahmepressfläche 28a, die bei zusammengesteckten Kopplungselementen 2 und 3 über die Kugeln 24 mit der Bolzenpressfläche 26 in Presskontakt gelangt. Dabei wirkt die Federkraft der Federn 20 von der Kolbenpressfläche 26 über die Kugeln 24 auf die Aufnahmepressfläche 28a, derart dass das zweite Kopplungselement 3 mit seinen z-Auflageflächen 11b gegen die z-Auflageflächen 11a des ersten Kopplungsteiles 2 gepresst wird.

Die Bolzenpressfläche 26 ist vorzugsweise quer zur Spannachse etwas verschiebbar am Bolzen 15 angeordnet, wozu etwa ein Bolzenendteil 15a mit der Bolzenpressfläche 26 am Bolzen 15 in der gewünschten Art befestigt ist. Dadurch kann sich die Bolzenpressfläche 26 bei leicht exzentrischer Kopplung der beiden Kopplungselemente 2, 3 der Exzentrizität anpassen, was verhindert, dass die Zentrierung durch die Federteile 8 von der Pressung beeinflusst wird.

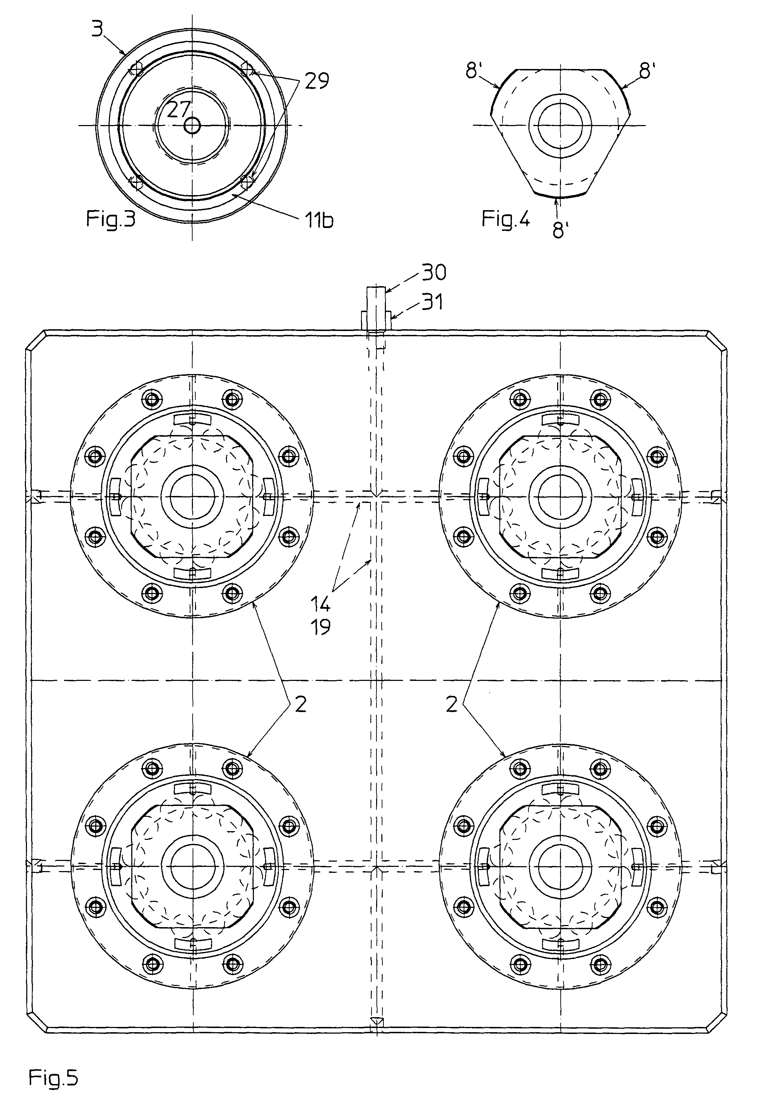

Gemäss Fig. 3 hat das zweite Kopplungselement entsprechend dem ersten Kopplungselement vier z-Auflageflächen 11b. Zudem sind von der den z-Auflageflächen 11b abgewendeten Seite im zweiten Kopplungselement ausgebildete und mit Gewinden versehene Befestigungsbohrungen 29 dargestellt. Anhand der Fig. 1 ist ersichtlich, dass diese Bohrungen 29 zur Befestigung des zweiten Kopplungselementes 3 an einer Palette oder einem anderen Bauteil verwendet werden können.

Fig. 4 zeigt eine Federeinrichtung mit drei Federteilen 8'. Die Federeinrichtung könnte gegebenenfalls auch unabhängig vom ersten Kopplungselement ausgebildet und anschliessend spielfrei auf dieses aufgesetzt werden.

Fig. 5 zeigt eine Palettenaufnahme mit vier ersten Kopplungselementen 2, die über Leitungen 14 bzw. 19 mit Druckluft bzw. Betätigungsfluid versorgt werden. Die beiden Anschlüsse 30 und 31 sind vorzugsweise übereinander an einer Seitenfläche angeordnet. Es versteht sich von selbst, dass die ersten und zweiten Kopplungselemente 2 und 3 in beliebigen Rastern angeordnet werden können. Aufgrund der grossen Flexibilität müssen die Einheiten nicht entlang von Achsrichtungen angeordet werden, sondern können etwa für spezielle Anwendungen beispielsweise auch entlang von Kreislinien gleichmässig verteilt sein. Weil es sich um eine flexible, bzw. federnde, Einzel- oder Mehrpunkte-Zentrierung handelt, muss nicht mit definierte Achsen gearbeitet werden und entsprechend kann auf zusätzliche Achs-Ausrichtungselemente verzichtet werden.

## Patentansprüche

1. Einheit zum lösbaren Verbinden von Teilen eines Palettiersystems, bestehend aus zwei aneinander festsetzbaren Kopplungselementen (2, 3), zwischen denen eine Verbindungsvorrichtung (22-26) zum Erzielen einer axialen Klemmung in der Richtung einer Spannachse und eine elastische Lagezuordnungsvorrichtung ausgebildet ist, wobei die Lagezuordnungsvorrichtung eine Federeinrichtung umfasst, die Versetzungen der miteinander verbundenen Kopplungselemente (2, 3) quer zur Spannachse zulässt und zwischen den Kopplungselementen (2, 3) beim Spannen bezüglich der Spannachse zentrierend wirkende Radialkräfte bereitstellbar macht, und von einem ersten Kopplungselement (2) mindestens drei, vorzugsweise vier, gegebenenfalls aber sechs, Federteile (8) in im wesentlichen regelmässigen Abständen entlang einer Kreislinie um die Spannachse, radial gegen eine kreisförmig um die Spannachse verlaufende Anschlagsfläche (9) eines zweiten Kopplungselementes (3) vorstehen und beim Spannen im Kontakt mit der Anschlagsfläche (9) elastisch so verformbar sind, dass zwischen den Federteilen (8) und der Anschlagsfläche (9) zentrierende Radialkräfte auftreten, **dadurch gekennzeichnet, dass** die Anschlagsfläche (9) konisch ist und die Federteile (8) beim axialen Spannen unter Durchbiegung um quer zur Spannachse verlaufende Biegelinien gegen den zunehmend gegen die Federteile (8) vorstehenden Konusbereich bewegbar sind.

2. Einheit nach Anspruch 1, **dadurch gekennzeichnet, dass** die Federteile (8) radial nach aussen, gegebenenfalls aber radial nach innen, vorstehen und die Anschlagsfläche (9) entsprechend nach innen, bzw. nach aussen, gerichtet ist.

3. Einheit nach Anspruch 1 oder 2, **dadurch gekennzeichnet, dass** die Verbindungsvorrichtung am einen Kopplungselement (2) einen Bolzen (15) und am anderen Kopplungselement (3) eine Ausnehmung (27) für den Bolzen (15) sowie eine zwischen dem Bolzen (15) und und der Ausnehmung (27) wirkende Spannvorrichtung aufweist, welche Spannvorrichtung vorzugsweise eine ringförmige Kugelanordnung (23,24), insbesondere einen Kugelkäfig, und an jedem der beiden Kopplungselemente (2, 3) eine konische Pressfläche (26, 28a) umfasst, welche beiden Pressflächen (26, 28a) über die Kugeln (24) kraftschlüssig verbindbar sind.

4. Einheit nach Anspruch 3, **dadurch gekennzeichnet, dass** die Spannvorrichtung eine Pressanordnung, vorzugsweise mit mehreren Federn (20), umfasst, welche die Kugeln (24) der Kugelanordnung (23, 24) mit der einen Pressfläche (26) gegen die andere Pressfläche (28a) pressbar macht, wobei der Pressanordnung eine entgegen der Presskraft wirkende, vorzugsweise fluidische, insbesondere pneumatische, gegebenenfalls hydraulische, Betätigungsanordnung (16-19) zugeordnet werden kann, die die beiden Konusflächen (26, 28a) voneinander weg bewegbar und die beiden Kopplungselemente (2, 3) voneinander lösbar macht.

5. Einheit nach Anspruch 3 oder 4, **dadurch gekennzeichnet, dass** der Bolzen (15) mit der Pressanordnung verbunden am ersten Kopplungselement (2) ausgebildet ist.

6. Einheit nach einem der Ansprüche 1 bis 5, **dadurch gekennzeichnet, dass** die beiden Kopplungselemente (2, 3) in einer Normalebene zur Spannachse einander zuzuordnende Kontaktflächen (11a, 11b) umfassen, von denen vorzugsweise je mindestens drei, insbesondere vier, gegebenenfalls aber sechs, in im wesentlichen regelmässigen Abständen entlang einer Kreislinie um die Spannachse angeordnet sind, wobei vorzugsweise um die Kontaktflächen (11a) eine ringförmige Dichtung (10) verläuft und den Kontaktflächen (11a) Austrittsöffnungen für ein Reinigungsfluid, insbesondere Druckluft, zugeordnet sind.

7. Palettiervorrichtung mit mindestens einer Palettenaufnahme, mindestens einer Palette und mindestens zwei Einheiten (1) nach einem der Ansprüche 1 bis 6, von denen erste Kopplungselemente (2) an der Palettenaufnahme und zweite Kopplungselemente (3) an der Palette in entsprechenden Rastern befestigt sind.

## Claims

1. A unit for detachably connecting parts of a palletising system, comprising two coupling elements (2, 3), which can be fixed together and between which a connection arrangement (22-26) is provided, for producing axial clamping in direction of a clamping axis, together with an elastic position-adjusting arrangement, the position-adjusting arrangement comprising spring means, which allow displacement of the interconnected coupling elements (2, 3) perpendicular to the clamping axis and produce radial centring forces in relation to the clamping axis which act between the coupling elements (2, 3) during the clamping operation, and at least three, preferably four, and possibly six, spring components (8) project in radial direction from a first coupling element (2) at substantially regular intervals along a circular line about the clamping axis towards a stop face (9) of a second coupling element (3), said stop face (9) encircling the clamping axis and said spring components (8) being elastically deformable on contact with the stop face (9) during the clamping operation, so that radial centring forces occur between the spring components (8) and the stop face (9), **characterized in that** the stop face (9) is conical, and during the axial clamping operation the spring components (8) can move against the conical area, which projects increasingly towards the spring components (8), by deflecting along bending lines running perpendicular to the clamping axis.

2. A unit according to Claim 1, **characterized in that** the spring components (8) project radially outwards, but possibly radially inwards, and the stop face (9) is oriented inwards or outwards accordingly.

3. A unit according to Claim 1 or 2, **characterized in that** the connection arrangement includes a bolt (15) on one coupling element (2) and a recess (27) for the bolt (15) on the other coupling element (3) as well as a clamping device acting between the bolt (15) and the recess (27), which clamping device preferably comprises an annular ball arrangement (23, 24), in particular a ball cage, and, on each of the two coupling elements (2, 3), a conical clamping face (26, 28a), the two clamping faces (26, 28a) being capable of non-positive connection by way of the balls (24).

4. A unit according to Claim 3, **characterized in that** the clamping device comprises a pressing arrangement, preferably having a plurality of springs (20), which facilitates the pressing of the balls (24) of the ball arrangement (23, 24) with one clamping face (26) against the other clamping face (28a), an operating arrangement (16-19) being associated with the pressing arrangement, said operating arrangement (16-19) preferably being fluidic, particularly pneumatic, possibly hydraulic and acting against the clamping force, thus enabling the two conical faces (26, 28a) to move away from one another and the two coupling elements (2, 3) to become detached from one another.

5. A unit according to Claim 3 or 4, **characterized in that** the bolt (15) is connected to the pressing arrangement on the first coupling element (2).

6. A unit according to one of Claims 1 to 5, **characterized in that** the two coupling elements (2, 3) include, in a plane which is normal to the clamping axis, contact faces (11a, 11b) which are to be associated with one another, of which preferably in each case at least three, particularly four, but possibly six, are disposed at substantially regular intervals along a circular line about the clamping axis, an annular seal (10) preferably extending around the contact faces (11a), and outlets for a cleaning fluid, particularly compressed air, being associated with the contact faces (11a).

7. A palletising device with at least one pallet holder, at least one pallet and at least two units (1) according to one of Claims 1 to 6, of which first coupling elements (2) are fixed on to the pallet holder and second coupling elements (3) are fixed in corresponding recesses on the pallet.

## Revendications

1. Unité pour la liaison temporaire de pièces d'un système de palettisation, constituée de deux éléments d'accouplement (2, 3) pouvant être fixés l'un sur l'autre, entre lesquels sont conçus un dispositif de liaison (22-26), visant à obtenir un serrage axial en direction d'un axe de serrage et un dispositif élastique d'affectation de position, le dispositif d'affectation de position comprenant un système à ressorts, qui admet des décalages transversaux à l'axe de serrage des éléments d'accouplement (2, 3) reliés entre eux et qui, lors d'un serrage en fonction de l'axe de serrage, met à disposition entre les éléments d'accouplement (2, 3) des forces radiales à effet de centrage et à partir d'un premier élément d'accouplement (2), au moins trois, de préférence quatre, le cas échéant également six ressorts (8) saillissent à distances sensiblement égales, le long d'une ligne de circonférence autour de l'axe de serrage, de manière radiale contre une surface de butée (9) d'un second élément d'accouplement (3) s'étendant en forme de cercle autour de l'axe de serrage et qui, lors du serrage au contact avec la surface de butée (9) peuvent subir une déformation élastique telle, que des forces radiales de centrage sont générées entre les ressorts (8) et la surface de butée (9), **caractérisée en ce que** la surface de butée (9) est conique et lors du serrage axial, sous l'effet de la flexion, les ressorts (8) peuvent se mouvoir autour de lignes de flexion s'étendant de manière transversale à l'axe de serrage, contre la zone conique qui saillit de plus en plus contre les ressorts (9).

2. Unité selon la revendication 1, **caractérisée en ce que** les ressorts (8) saillissent en direction radiale vers l'extérieur, mais aussi le cas échéant en direction radiale vers l'intérieur et **en ce que** les surfaces de butée (9) sont orientées en conséquence vers l'intérieur ou vers l'extérieur.

3. Unité selon l'une quelconque des revendications 1 ou 2, **caractérisée en ce que**, sur l'un des éléments d'accouplement (2) le dispositif de liaison présente un boulon (15) et sur l'autre élément d'accouplement (3) il présente un évidement (27) pour le boulon (15) ainsi qu'un dispositif de serrage agissant entre le boulon (15) et l'évidement (27), ledit dispositif de serrage comprenant de préférence une configuration annulaire de billes (23, 24), en particulier une cage à billes et englobant une surface de compression (26, 28a) sur chacun des deux éléments d'accouplement (2, 3), les deux surfaces de compression (26, 28a) pouvant être reliées par adhérence, par l'intermédiaire des billes (24).

4. Unité selon la revendication 3, **caractérisée en ce que** le dispositif de serrage englobe une configuration de compression, munie de préférence de plusieurs ressorts (20), qui permet de presser les billes (24) de la configuration de billes (23, 24) par l'intermédiaire d'une des surfaces de compression (26) contre l'autre surface de compression (28a), une configuration d'actionnement (16-19) agissant contre la force de compression, de préférence sous l'action d'un fluide, en particulier sous forme de configuration pneumatique, le cas échéant sous forme de configuration hydraulique peut être affectée à la configuration de compression et permet d'écarter l'une par rapport à l'autre les deux surfaces coniques (26, 28a) et de séparer les deux éléments d'accouplement (2, 3).

5. Unité selon l'une quelconque des revendications 3 ou 4, **caractérisée en ce que** le boulon (23) relié à la configuration de compression est conçu sur le premier élément d'accouplement (2).

6. Unité selon l'une quelconque des revendications 1 à 5, **caractérisée en ce que** les deux éléments d'accouplement (2, 3) englobent des surfaces de contact (11a, 11b) pouvant être affectées mutuellement sur un plan normal par rapport à l'axe de serrage et parmi lesquelles au moins trois, en particulier quatre, mais le cas échéant six surfaces sont disposées à distances sensiblement régulières le long de la ligne d'un cercle, autour de l'axe de serrage, un joint annulaire (10) s'étendant de préférence autour des surfaces de contact (11a) et des orifices de sortie destinés à un fluide de nettoyage, en particulier à de l'air comprimé étant associé aux surfaces de contact (11a).

7. Dispositif de palettisation comprenant au moins un système de réception de palettes, au moins une palette et au moins trois unités (1) selon l'une quelconque des revendications 1 à 6, parmi lesquelles des premiers éléments d'accouplement (2) sont fixés sur le système de réception des palettes et des seconds éléments d'accouplement (3) sont fixés sur la palette, dans des axes correspondants.
